# FASCICULE DE BREVET EUROPEEN

(11) **EP 2 215 809 B1**
(45) Date de publication et mention de la délivrance du brevet: **18.01.2012**
(21) Numéro de dépôt: 08857804.2
(22) Date de dépôt: 24.11.2008
(51) Int. Cl.: H04L 29/12

(54) **PROCEDE ET DISPOSITIF DE MAINTIEN D'UNE TABLE DE TRADUCTION D'ADRESSES**
VERFAHREN UND GERÄT ZUR VERWALTUNG EINER ADRESSENUMSETZUNGSTABELLE
METHOD AND DEVICE FOR MAINTAINING AN ADDRESS TRANSLATION TABLE

(30) Priorité: 30.11.2007 FR 0759443
(43) Date de publication de la demande: 11.08.2010
(73) Titulaire: FRANCE TELECOM, 75015 Paris (FR)
(72) Inventeur: LE ROUZIC, Jean-Claude, F-22560 Trebeurden (FR); SAVOURE, Régis, F-22300 Lannion (FR)
(86) Numéro de dépôt international: PCT/FR2008/052118
(87) Numéro de publication internationale: WO 2009/071830

(56) Documents cités:
- EP-A- 1 841 170
- US-A1- 2006 045 068
- US-A1- 2006 085 548
- US-B1- 6 886 103

## Description

### Arrière-plan de l'invention

L'invention se situe dans le domaine des réseaux de télécommunications.

Elle s'applique de façon privilégiée mais non limitative, dans les réseaux de télécommunications de voix sur IP ("Voice over Internet Protocol" ou VoIP).

Dans les réseaux de voix sur IP notamment, les utilisateurs s'enregistrent périodiquement pour informer le réseau de leur présence, fournissant ainsi une adresse de contact sur laquelle ils sont joignables. Dans de tels réseaux notamment, il est usuel que les terminaux utilisateurs accèdent au réseau par l'intermédiaire d'une passerelle domestique. Cette passerelle comporte, de façon connue, une table dans laquelle elle associe l'adresse IP et le port associé à chacun des terminaux du réseau domestique, avec une adresse et un port de cette même passerelle sur le réseau public.

Cette table est connue de l'homme du métier sous l'appellation "table de traduction d'adresses ou de nattage", le terme "nattage" venant de l'acronyme NAT ("Network Address Translation" en anglais). Le terme NAT est ici à prendre au sens large, c'est-à-dire qu'il englobe la notion étendue de translation d'adresses et de ports (NAPT "Network Address and port Translation" en anglais).

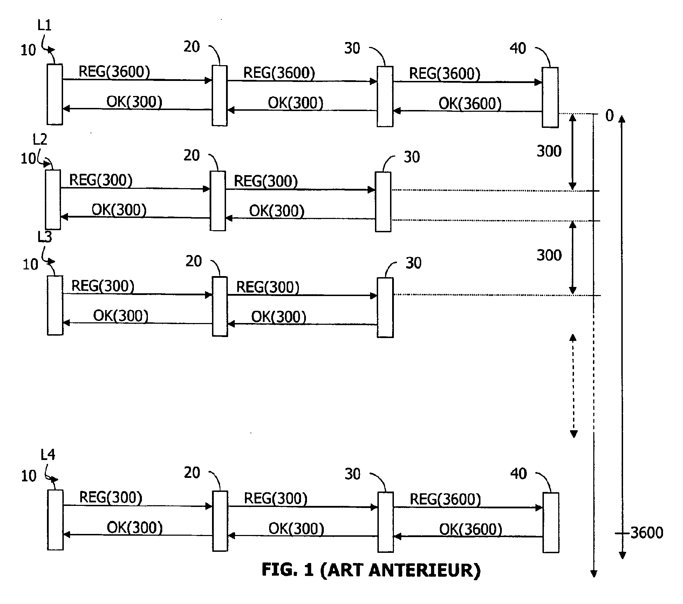

De façon connue, les passerelles effacent régulièrement le contenu des tables de traduction d'adresses si elles ne sont pas mises à jour. Une méthode connue utilisée pour maintenir à jour les tables de traduction d'adresses consiste à forcer artificiellement les échanges de signalisation entre le terminal de l'abonné et le réseau, comme décrit maintenant en référence à la **figure 1**.

Sur cette figure, on a représenté quatre échanges de messages, référencés L1 à L4, de ce mécanisme. Sur cette figure :
- la référence 10 désigne un terminal ;
- la référence 20 désigne une passerelle domestique ou un modem routeur comportant une table de nattage ;
- la référence 30 désigne un équipement de collecte d'abonnés apte à communiquer avec la passerelle domestique ; et
- la référence 40 désigne un équipement du coeur de réseau apte à gérer les enregistrements des utilisateurs pour un service donné, par exemple de voix sur IP, tel un serveur SIP ("Session Initiation Protocol", en anglais).

En référence à l'échange de messages L1, on suppose que le terminal 10 envoie, à l'entité 40 du coeur de réseau, une demande d'enregistrement pour 1 heure (REG (3600)).

Ces messages sont véhiculés via la passerelle domestique 20 et l'équipement de collecte d'abonnés 30, tous deux placés en coupure de flux entre le terminal 10 et le serveur SIP 40.

Sur réception de ce message, le serveur SIP 40 donne son autorisation pour maintenir l'enregistrement dans ses bases de données de l'abonné pendant 1 heure par l'envoi d'un message OK (3600).

Il est connu de dire que, dans ces conditions, la valeur du bail fournie par le serveur SIP est de 1 heure.

Afin de forcer les échanges de signalisation liés à l'enregistrement de l'utilisateur du terminal 10 pour maintenir les informations stockées dans la table de traduction d'adresses, l'équipement de collecte d'abonnés 30 abaisse volontairement la valeur du bail fournie par le réseau en envoyant, au terminal 10, via la passerelle domestique 20, un message d'autorisation dont la valeur du bail est, dans cet exemple, fixée à 5 minutes (300 secondes).

En conséquence, et comme représenté en référence à l'échange de messages L2, le terminal 10 effectue, sensiblement 300 secondes après avoir reçu le message modifié par l'équipement de collecte d'abonnés 30, une demande d'enregistrement pour 300 secondes à destination du serveur SIP 40. Il est en effet connu que les terminaux 10 de voix sur IP s'adaptent aux autorisations fournies par le coeur de réseau.

Bien entendu, il n'est pas nécessaire que l'équipement de collecte d'abonnés 30 achemine cette demande d'enregistrement jusqu'au coeur de réseau 40, puisque, dans l'exemple décrit ici, celui-ci a préalablement donné un accord pour maintenir l'abonnement du terminal 10 pour une durée de bail d'1 heure.

En conséquence, l'équipement de collecte d'abonnés 30 se contente d'envoyer au terminal 10 une nouvelle autorisation d'abonnement pour 300 secondes supplémentaires.

Le mécanisme décrit en référence à l'échange de messages L2 se répète de façon identique, comme représenté en référence à l'échange de messages L3 et par la double flèche tiretée.

De façon connue, l'équipement de collecte d'abonnés 30 surveille en parallèle si le bail fourni par le serveur SIP 40 (à savoir 1 heure dans cet exemple) approche de son expiration.

Nous supposerons que c'est le cas, lorsque l'équipement de collecte d'abonnés 30 reçoit la demande d'enregistrement de 5 minutes au cours de l'échange de messages L4.

Dans ces conditions, l'équipement de collecte d'abonnés 30 substitue, dans ce message d'enregistrement, la valeur du bail diminuée de 300 secondes, par la valeur du bail d'origine 3600 secondes, de façon à solliciter un nouvel abonnement d'1 heure du terminal 10 auprès du serveur SIP 40.

Comme décrit précédemment en référence à l'échange de messages L1, le serveur SIP 40 donne son accord pour un bail d'1 heure, et l'équipement de collecte d'abonnés 30 substitue dans ce message la valeur du bail fournie par le coeur de réseau par une valeur diminuée, fixée à 300 secondes, de façon à forcer artificiellement les échanges de signalisation émis par le terminal 10, pour maintenir à jour la table de traduction d'adresses dans la passerelle domestique 20. Le document US 6886103B1 concerne un procédé d'agrandissement d'un dispositif de traduction d'adresses pour des protocoles sans support.

### Inconvénients de l'art antérieur

Un premier inconvénient de ce mécanisme est qu'il génère artificiellement du trafic de messages de signalisation applicative superflus sur le réseau d'accès. Ceci oblige notamment un opérateur à doubler la capacité des équipements de collecte des abonnés au service de voix sur IP.

Un deuxième inconvénient de ce mécanisme est qu'il nécessite d'introduire dans les équipements de collecte des fonctionnalités spécifiques à la génération de ce trafic artificiel.

### Objet et résumé de l'invention

Il existe donc un besoin de proposer une solution plus simple et plus efficace pour maintenir une table de traduction d'adresses d'une passerelle domestique ou d'un modem routeur, en particulier sans générer de messages superflus dans le réseau d'accès.

Ceci est réalisé par un dispositif de maintien d'une table de traduction d'adresses, placé en coupure de flux entre un terminal et une entité tierce d'un réseau de télécommunications, caractérisé en ce qu'il est apte à mettre en oeuvre des moyens de:
- interception d'un message de requête d'enregistrement émis par le terminal à destination de ladite entité tierce selon un protocole de signalisation applicative, ledit message étant reçu par ledit dispositif sur un port de réception dédié aux échanges de messages selon ledit protocole à une première date de réception,
- vérification de l'existence d'une entrée spécifique aux échanges de messages de signalisation applicative selon ledit protocole entre le terminal et l'entité tierce dans la table de traduction d'adresses;
- s'il n'existe aucune entrée spécifique aux échanges de messages de signalisation applicative selon ledit protocole entre le terminal et l'entité tierce, création d'une entrée spécifique dans la table de traduction d'adresses associant à une adresse privée et un port privé du terminal dans un réseau privé le reliant audit dispositif, une adresse publique, un port public de ce terminal dans le réseau de télécommunications et une indication de validité de l'entrée, ladite indication de validité prenant en compte la première date de réception et une première durée de validité.

Selon l'invention, le dispositif de maintien d'une table de traduction d'adresses reconnaît, à l'aide d'un des ports d'entrée dédiés aux messages de signalisation applicative, que le message émis par le terminal à destination de l'entité tierce est un message de requête selon un protocole de signalisation applicative particulier. Ce protocole correspond à un type d'entrée spécifique dans la table de traduction d'adresses à laquelle il associe une indication de validité propre à cette entrée.

Ainsi, l'invention repose sur une approche tout à fait nouvelle et inventive du maintien d'une table de traduction d'adresses qui s'appuie sur une capacité du dispositif à reconnaître le protocole de signalisation applicative utilisé dans les échanges de messages entre le terminal et l'entité tierce et à créer dans la table de traduction d'adresses une entrée spécifique concernant les échanges de messages selon ce protocole comprenant une indication de validité adaptée à ce type d'entrée.

Selon un premier aspect de l'invention, la première durée de validité a une valeur prédéterminée, qui est spécifique audit protocole de signalisation applicative.
Une telle première durée de validité est, par exemple, configurée à la valeur usuelle de durée d'un bail d'enregistrement délivré par l'entité tierce. Un avantage est que, dans la majorité des cas, la première indication de validité correspond à une durée d'enregistrement accordée par l'entité tierce, ce qui limite le recours aux messages superflus selon l'art antérieur.

Selon un deuxième aspect de l'invention, la requête d'enregistrement émise par le terminal d'utilisateur comprend une durée de validité d'enregistrement souhaitée et la première durée de validité est choisie égale à ladite durée de validité d'enregistrement souhaitée.

Un avantage est que l'indication de validité est spécifiquement adaptée à la requête d'enregistrement du terminal d'utilisateur. Ainsi, si la requête est acceptée pour la durée d'enregistrement souhaitée, la durée de validité de l'entrée correspond bien à la durée du bail d'enregistrement. Dans ce cas-là, il n'est donc plus nécessaire d'avoir recours au mécanisme d'envoi de messages superflus selon l'art antérieur.

Selon un troisième aspect de l'invention, le dispositif de maintien d'une table de traduction d'adresses comprend les étapes suivantes :
- attente d'un message de réponse émis par l'entité tierce à destination du port public dudit terminal d'utilisateur dans le réseau de télécommunications; et
- à réception d'un message d'autorisation à une deuxième date de réception, en provenance de l'entité tierce et à destination du terminal, extraction d'une durée de validité de l'enregistrement, si elle existe; et
- Si la durée de validité existe et est non nulle, mise à jour de l'indication de validité de l'entrée à partir de la deuxième date de réception et de la durée de validité de l'enregistrement extraite.

Selon ce troisième aspect de l'invention, l'indication de validité de l'entrée spécifique aux échanges de signalisation applicative entre le terminal et l'entité tierce selon un protocole particulier, est renseignée en deux temps :
- dans un premier temps, au moment de la création de l'entrée et à partir d'une première durée de validité. Cette première durée peut être n'importe quelle valeur, par exemple, une valeur prédéterminée de quelques minutes ou la valeur de la durée de validité de l'enregistrement souhaitée par le terminal d'utilisateur comme évoqué précédemment.
- dans un deuxième temps, lorsqu'il intercepte le message d'autorisation émis par l'entité tierce, qui est, de préférence, une entité d'entrée dans un réseau, telle que, à titre d'exemple, un serveur applicatif de type P-CSCF ("Proxy Call Session Control Function" en anglais) dans une architecture IMS ("IP Multimedia Subsystem" en anglais), le dispositif selon l'invention en extrait une durée de validité de l'enregistrement. Il utilise cette durée de validité de l'enregistrement pour mettre à jour l'indication de validité de l'entrée dans la table.

Il en résulte que l'indication de validité de l'entrée dans la table de traduction d'adresses est mise à jour à partir de la durée de l'enregistrement ou bail réellement délivrée par le serveur applicatif. Un avantage est que le dispositif selon ce troisième aspect de l'invention garantit que le maintien de l'entrée dans la table de traduction d'adresses se fait en phase avec un enregistrement réussi.

Un autre avantage est qu'il permet de choisir une première durée de validité courte, par exemple de quelques minutes, tout en évitant que le terminal d'utilisateur émette des messages de signalisation superflus pour maintenir la table de traduction d'adresses jusqu'à la fin du bail. Un intérêt de choisir une première durée de validité de quelques minutes plutôt qu'une durée de bail d'enregistrement (d'au moins une heure) est d'assurer, en cas de rejet de la requête du terminal d'utilisateur par l'entité tierce, un effacement plus rapide de l'entrée de la table de traduction d'adresses.

Par conséquent, l'entité de collecte, contrairement à l'art antérieur, n'a plus de rôle à jouer dans le maintien de la table de traduction d'adresses. En particulier, elle n'a plus ni à détecter une situation de traduction d'adresses, encore appelée situation de NAT, ni à substituer la valeur de durée de validité de l'enregistrement par une valeur inférieure correspondant à la validité de quelques minutes attribuée usuellement à une entrée standard d'une table de traduction d'adresses.

Selon un autre aspect de l'invention, l'indication de validité de l'entrée est mise à jour en ajoutant la durée de validité de l'enregistrement à la deuxième date de réception.

Un avantage est que l'entrée spécifique aux échanges de messages selon le protocole de signalisation applicative entre le terminal et le réseau de télécommunications indique, par une seule valeur, la date d'expiration de l'entrée.

Selon une variante, l'indication de validité peut comporter une durée de validité de l'entrée égale à la durée de validité de l'autorisation et une date à partir de laquelle la durée de validité s'applique, par exemple la deuxième date de réception.

Selon un autre aspect de l'invention, lorsqu'une entrée spécifique aux échanges de messages de signalisation applicative selon ce protocole entre ledit terminal et le réseau de télécommunications existe déjà dans la table de traduction d'adresses, ledit dispositif relaie directement le message de signalisation applicative à l'entité tierce et se met en attente d'un message d'autorisation.

Selon un autre aspect de l'invention, à réception d'un message d'autorisation, comprenant une durée de validité de l'enregistrement égale à zéro ou aucune durée de validité de l'autorisation, le dispositif de maintien d'une table de traduction d'adresses est apte à mettre en oeuvre des moyens d'effacement de l'entrée de la table de traduction d'adresses.

Un avantage est que les entrées de la table de traduction spécifiques aux échanges de messages de signalisation applicative selon l'invention sont libérées au plus vite, ce qui permet une optimisation des ressources de la table de translation d'adresses.

Corrélativement, l'invention concerne un procédé de maintien d'une table de traduction d'adresses et de ports destiné à être mis en oeuvre par un dispositif placé en coupure de flux entre un terminal d'utilisateur d'un réseau privé et une entité tierce d'un réseau de télécommunications, caractérisé en ce qu'il comporte les étapes suivantes :
- interception d'un message de requête d'enregistrement émis par le terminal à destination de ladite entité tierce selon un protocole de signalisation applicative, ledit message étant reçu par ledit dispositif sur un port de réception dédié aux échanges de messages selon ledit protocole à une première date de réception,
- vérification de l'existence d'une entrée spécifique aux échanges de messages de signalisation applicative selon ledit protocole entre le terminal et l'entité tierce dans la table de traduction d'adresses; et
- s'il n'existe aucune entrée spécifique aux échanges de messages de signalisation applicative selon ledit protocole entre le terminal et l'entité tierce, création d'une entrée spécifique dans la table de traduction d'adresses associant à une adresse privée et un port privé du terminal dans un réseau privé le reliant audit dispositif, une adresse publique, un port public de ce terminal dans le réseau de télécommunications et une indication de validité de l'entrée, ladite indication de validité prenant en compte la première date de réception.

Selon un aspect de l'invention, le procédé comprend en outre les étapes suivantes :
- attente d'un message d'autorisation émis par l'entité tierce en réponse à ladite requête à destination du terminal d'utilisateur;
- à réception d'un message d'autorisation à une deuxième date de réception, en provenance de l'entité tierce et à destination du terminal, extraction d'une durée de validité de l'enregistrement, si elle existe; et
- Si la durée de validité existe et est non nulle, mise à jour de l'indication de validité de l'entrée à partir de la deuxième date de réception et de la durée de validité de l'enregistrement.

Dans un mode particulier de réalisation, les différentes étapes du procédé de maintien d'une table de traduction d'adresses sont déterminées par des instructions de programmes d'ordinateurs.

En conséquence, l'invention vise aussi un programme d'ordinateur sur un support d'informations, ce programme étant susceptible d'être mis en oeuvre dans un dispositif de maintien d'une table de traduction d'adresses ou plus généralement dans un ordinateur, ce programme comportant des instructions adaptées à la mise en oeuvre des étapes d'un procédé de maintien d'une table de traduction d'adresses tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Le dispositif et le procédé selon l'invention peuvent notamment être mis en oeuvre par une passerelle domestique ou un modem routeur.

En conséquence, l'invention vise aussi une passerelle domestique ou modem routeur reliant un terminal d'utilisateur d'un réseau privé à une entité tierce d'un réseau de télécommunications, caractérisée en ce qu'elle comprend :
- une table de traduction d'adresses apte à stocker une entrée spécifique aux échanges de messages de signalisation applicative entre le terminal d'utilisateur et l'entité tierce du réseau de télécommunications selon un protocole de signalisation applicative, ladite entrée associant une adresse privée et un port privé du terminal dans le réseau privé, à une adresse publique et un port public du terminal dans le réseau de télécommunications et à une indication de validité de ladite entrée ; et
- un dispositif de maintien de la table de traduction d'adresses tel que mentionné précédemment.

L'invention vise enfin une table de traduction d'adresses apte à associer, dans une entrée, une adresse privée et un port privé d'un terminal dans le réseau privé à une adresse publique et un port public de ce terminal dans le réseau de télécommunications, caractérisée en ce qu'elle comprend une entrée spécifique à des échanges de messages de signalisation applicative entre ce terminal d'utilisateur et une entité tierce du réseau de télécommunications selon un protocole de signalisation applicative, ladite entrée comprenant en outre une indication de validité de ladite entrée.

### Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels :
- la figure 1 présente de façon schématique le mécanisme de maintien d'une table de traduction d'adresses selon l'art antérieur;
- la figure 2 présente de façon schématique le dispositif de maintien d'une table de traduction d'adresses dans son environnement, selon un mode de réalisation de l'invention;
- la figure 3 présente sous forme d'organigramme, des étapes d'un procédé de maintien d'une table de traduction d'adresses selon l'invention; et
- la figure 4 présente des échanges de messages mis en oeuvre dans le contexte de l'invention décrite en référence à la figure 3.

### Description d'un mode de réalisation particulier de l'invention

Le principe général de l'invention consiste en la mise en oeuvre d'un mécanisme de maintien d'une table de traduction d'adresses spécifique aux entrées de cette table concernant des échanges de messages de signalisation applicative d'un terminal d'utilisateur d'un réseau privé avec une entité tierce d'un réseau de télécommunications selon un protocole de signalisation applicative.

Dans ce qui suit, nous considérerons l'exemple d'un terminal d'utilisateur souhaitant accéder à un service de voix sur IP ("Voice over IP" ou VoIP en anglais) par l'intermédiaire d'un réseau IMS. Ce terminal d'utilisateur envoie donc une requête d'enregistrement au service auprès d'une entité d'entrée du réseau IMS selon un protocole de signalisation applicative, par exemple le protocole SIP.

On notera toutefois que l'invention ne se limite pas à cet exemple, mais que le mécanisme de maintien d'une table de traduction d'adresses selon l'invention peut être déclenché suite à l'envoi par un terminal d'utilisateur d'une requête d'enregistrement selon un tout autre protocole de signalisation applicative, tel que, par exemple H323, H. 248, MGCP ("Media Gateway Control Protocol" en anglais).

Dans ce qui suit, le terme de requête d'enregistrement doit être interprété au sens large, c'est-à-dire qu'il ne se limite pas à une requête d'enregistrement initiale, mais peut être aussi une requête de renouvellement d'enregistrement ou une requête de désenregistrement. On notera aussi que certains protocoles de signalisation applicative spécifient d'autres types de requêtes d'enregistrement. C'est le cas du protocole SIP, par exemple, qui prévoit l'envoi par un terminal d'utilisateur d'une demande d'enregistrement de listage de baux actifs, qui lui permet d'obtenir, en réponse, la durée de validité ou de bail restante pour chacune de ses adresses de contact.

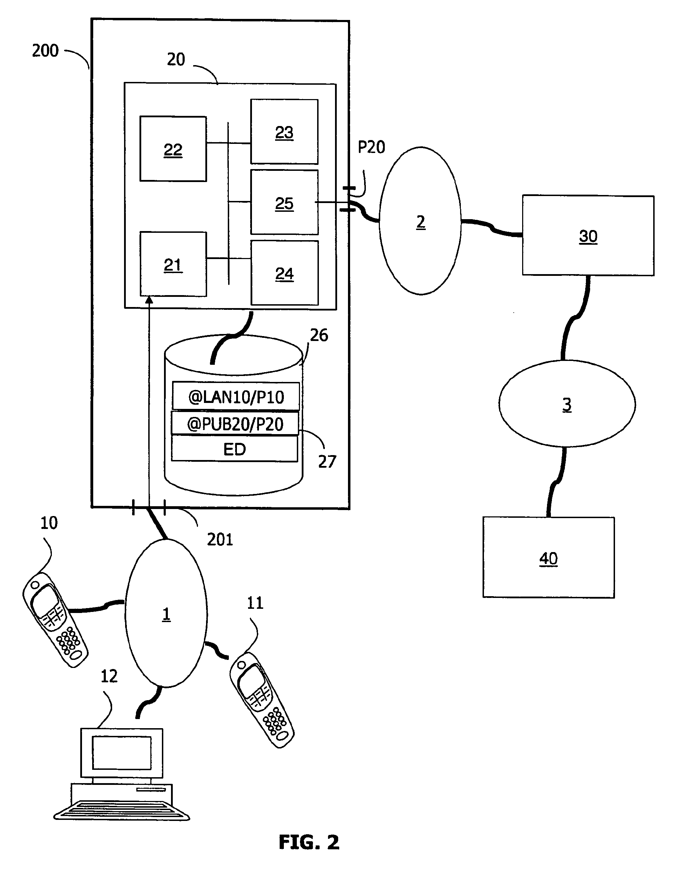

En référence à la **figure 2**, on présente un terminal d'utilisateur 10 connecté à un réseau privé ou réseau domestique 1. Le réseau privé de l'utilisateur comprend également un autre terminal d'utilisateur 11 et un ordinateur 12. L'installation cliente est raccordée à un réseau de collecte 2 de l'opérateur par l'intermédiaire d'une passerelle domestique ou d'un modem routeur 200. Pour des raisons de simplicité, nous n'utiliserons dans la suite que le terme passerelle domestique pour désigner les deux types d'équipements. Il convient toutefois de garder à l'esprit que tout équipement possédant la fonction de modem routeur, est apte à mettre en oeuvre le procédé selon l'invention.

Un équipement de collecte 30 relaie une requête d'enregistrement émise par le terminal d'utilisateur 10 selon le protocole SIP, vers un serveur applicatif 40 du réseau coeur 3 mettant en oeuvre une architecture IMS. Le serveur applicatif 40 désigne toute entité du réseau de télécommunications apte à échanger des messages de signalisation applicative directement avec le terminal d'utilisateur 10, par exemple, une entité d'entrée SIP dans le réseau IMS, de type P-CSCF. La requête d'enregistrement sera ensuite relayée vers une autre entité du réseau IMS hébergeant une fonction REGISTRAR, par exemple une entité S-CSCF (Serving-Call Session Control Function" en anglais).

La passerelle domestique 200 comprend une table de traduction d'adresses 26.

Une table de traduction d'adresses a classiquement pour fonction de traduire un couple (adresse privée @LAN10, port privé P10) du terminal d'utilisateur 10 en un couple (adresse publique @PUB20, port public P20).

Selon l'invention, l'entrée 27 est spécifique à une succession d'échanges de messages de signalisation applicative, selon un protocole de signalisation donné, entre le terminal 10 et une entité tierce telle que le serveur applicatif 40. Elle est créée dès lors que le terminal d'utilisateur demande à communiquer avec le serveur applicatif 40 en envoyant une requête d'enregistrement au réseau IMS selon le protocole de signalisation. Selon l'invention, l'entrée 27 comprend, en plus des couples (adresse, port) privé et public, une indication de validité ED. L'entrée 27 selon l'invention n'est donc pas un quadruplet comme dans l'art antérieur, mais un quintuplet.

La passerelle domestique 200 comprend en outre un dispositif de maintien de la table de traduction d'adresses 20 selon l'invention.

La passerelle domestique 200 comprend enfin au moins un port de réception 201 dédié à la réception de messages de signalisation applicative selon le protocole donné en provenance d'un des terminaux 10, 11, 12 du réseau privé de l'utilisateur.

Dans le mode de réalisation décrit ici, le dispositif 20 selon l'invention comporte les éléments matériels que l'on retrouve classiquement dans un ordinateur conventionnel, à savoir un processeur 22, une mémoire vive de type RAM 23, une mémoire morte de type ROM 24, des moyens 21 de télécommunication avec le réseau privé 1 et des moyens 25 de télécommunication avec le réseau public 2.

Conformément à l'invention, le dispositif 20 est connecté à la table de traduction d'adresses 26, dans laquelle il peut créer ou effacer des entrées.

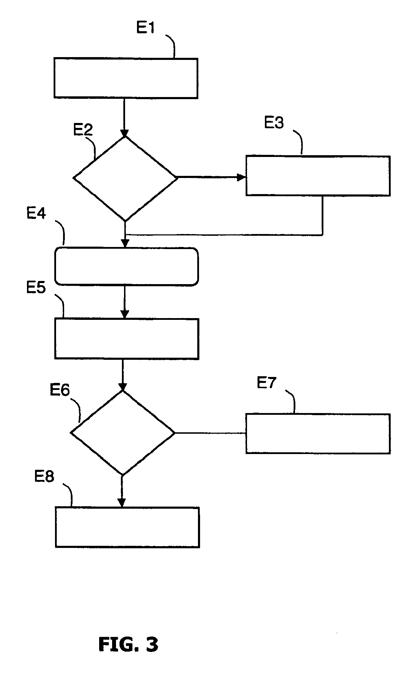

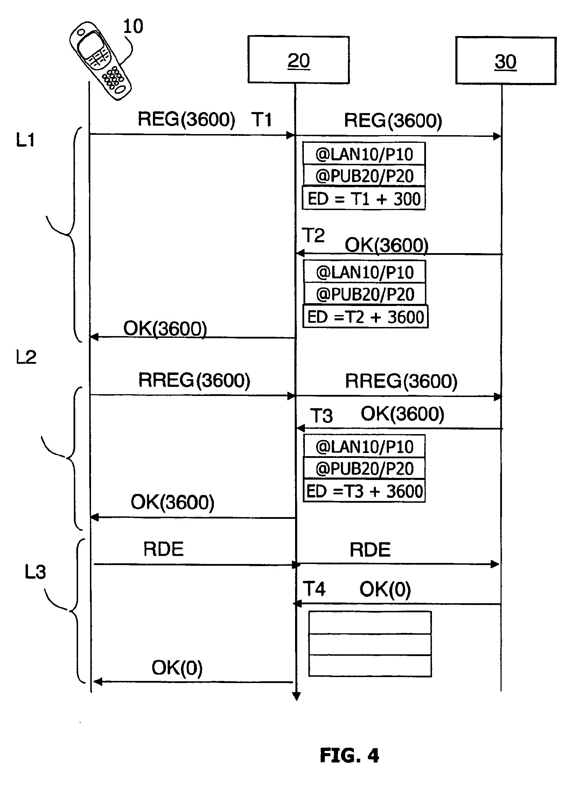

La mémoire morte 24 constitue un support d'enregistrement conforme à l'invention. Ce support mémorise un programme d'ordinateur conforme à l'invention, ce programme comportant des instructions pour l'exécution des étapes d'un procédé de maintien d'une table de traduction d'adresses conforme à l'invention et qui va maintenant être décrit en référence aux **figures 3** **et** **4****.**

Le procédé de maintien d'une table de traduction d'adresses mis en oeuvre par le dispositif 20 comprend une étape E1 d'interception d'une requête d'enregistrement au service de voix sur IP VoIP émis par le terminal 10 à destination du serveur applicatif 40 et reçu sur un port de réception 201 de la passerelle domestique dédié au protocole de signalisation applicative SIP, à une première date de réception DR.

Selon une étape E2, il vérifie l'existence d'une entrée 27 spécifique aux échanges de message de signalisation entre ledit terminal 10 et le réseau 3 selon le protocole SIP dans la table de traduction d'adresses 26;

S'il n'existe aucune entrée spécifique aux échanges de messages de signalisation applicative de ce type dans la table de traduction d'adresses 26, le procédé selon l'invention crée, dans une étape E3, une entrée spécifique 27 dans la table de traduction d'adresses 26 associant à une adresse privée et un port privé (@LAN10, P10) du terminal 10 dans son réseau privé 1, une adresse publique et un port public (@PUB20, P20) de ce terminal dans le réseau de collecte 2 et une indication de validité, par exemple une première date d'expiration ED de l'entrée à compter de la première date de réception DR. Il calcule la première date d'expiration ED, par exemple en ajoutant une première durée de validité. Selon une variante, l'indication de validité comprend une date de début et une première durée de validité.

Cette première durée de validité peut être, selon un premier aspect de l'invention, une valeur prédéterminée ou, selon un deuxième aspect de l'invention, une durée de validité d'enregistrement souhaitée, si la requête du terminal d'utilisateur en spécifie une.

Selon un troisième aspect de l'invention, la première durée de validité est mise à jour en deux temps. Dans un premier temps, le dispositif de maintien d'une table de traduction d'adresses lui affecte une valeur de quelques minutes, par exemple, 300 secondes, à la date de réception DR.

Dans un deuxième temps, selon une étape E4, il relaie le message de signalisation applicative à l'équipement de collecte 30 et se met ensuite en attente d'un message de réponse en provenance du serveur applicatif 40 et à destination du terminal 10.

Si une entrée spécifique aux échanges de messages de signalisation applicative de type VoIP existe pour le terminal d'utilisateur 10 dans la table de traduction d'adresses 26, le dispositif selon l'invention passe directement à l'étape E4.

A une deuxième date de réception, le dispositif selon l'invention intercepte, dans une étape E5, un message de réponse en provenance du serveur SIP 40 et reçu sur le port P20 de la passerelle domestique 200.

S'il s'agit d'un message d'autorisation, il indique une durée de validité de l'enregistrement accordée au terminal par le serveur d'application 40. Il s'agit, par exemple, d'une durée de validité d'un enregistrement SIP. La norme SIP (RFC3261) spécifie, par exemple, une durée de validité par défaut égale à une heure. La norme 3GPP spécifie, quant à elle, pour le système IMS une valeur par défaut égale à une semaine. On notera toutefois que l'invention ne se limite pas à ces exemples et qu'elle s'applique à toute autre valeur choisie par l'opérateur du réseau de télécommunications.

Le dispositif selon l'invention extrait la durée de validité de l'enregistrement du message d'autorisation reçu dans une étape E5.

S'il s'agit d'un message de rejet, aucun traitement de mise à jour de la première date d'expiration ED n'est effectué. L'effacement de l'entrée 27 de la table de traduction d'adresses 26 sera effectuée à l'expiration de la date ED.

S'il s'agit d'un message de réponse à une demande de désenregistrement explicite il peut indiquer soit une durée de validité nulle, soit aucune durée.

S'il s'agit d'un message de réponse à une demande d'enregistrement de listage de baux actifs, il peut indiquer une ou plusieurs durées de validité non nulles, soit aucune durée.

Dans une étape E6, le dispositif selon l'invention teste la valeur de la durée de validité extraite. Si elle est non nulle, il calcule, dans une étape E7, une nouvelle date d'expiration E7 de l'entrée de la table de traduction d'adresses, en ajoutant à la deuxième date de réception la valeur de la durée de validité. Il met ensuite à jour le quintuplet de l'entrée spécifique 27, en remplaçant l'ancienne date d'expiration par la date d'expiration calculée.

Si la durée de validité est nulle ou inexistante dans le message de réponse reçu, le dispositif selon l'invention efface, en E8, l'entrée 27 de la table de traduction d'adresses 26.

Nous allons maintenant décrire, en référence à la **figure 4****,** des échanges de messages L1 à L3, mis en oeuvre dans un mode de réalisation de l'invention.

Dans un premier échange de messages de signalisation applicative L1, on suppose que le terminal utilisateur 10 émet une requête d'enregistrement REG (3600), pour s'enregistrer à un service auprès du serveur applicatif 40, par exemple, selon le protocole SIP. Cette demande est transmise successivement par la passerelle domestique 200 comprenant le dispositif selon l'invention et l'équipement de collecte d'abonnés 30, jusqu'au serveur applicatif 40.

Cette requête peut préciser ou non une durée de validité d'enregistrement souhaitée, par exemple de 3600 secondes.

Cette requête déclenche le mécanisme de maintien de la table de traduction d'adresses selon l'invention.

Le dispositif 20 selon l'invention contenu dans la passerelle domestique 200 intercepte le message reçu sur le port dédié 201 à la date de réception T1. Il interroge la table de traduction d'adresses 26 de la passerelle domestique pour vérifier si une entrée spécifique aux échanges de messages de signalisation applicative selon un protocole de VoIP correspondant au terminal 10 existe. Si c'est le cas, il relaie le message REG(3600) à l'équipement de collecte 30. Sinon, il crée une entrée 27 dans la table de traduction d'adresses 26, dans laquelle il inscrit le quintuplet (@LAN10, P10, @PUB20, P20, ED), selon le mécanisme de l'invention précédemment décrit. L'indication de validité est calculée à partir de la date de réception de la requête REG par le dispositif 20 et d'une première durée de validité, qui peut avoir une valeur prédéterminée ou la valeur de la durée de validité d'enregistrement souhaitée.

Selon un aspect de l'invention, le dispositif 20 se met ensuite en attente d'un message de réponse de la part de l'entité tierce.

Lorsqu'il reçoit un message de réponse OK(3600) à la date de réception T2 sur le port public P20 crée par la passerelle domestique 200 pour les échanges du terminal d'utilisateur 10 avec le réseau public, il l'intercepte et en extrait une durée de validité DV si elle existe.

Si cette durée est non nulle, il met à jour la date d'expiration dans l'entrée 27 de la table de traduction d'adresses à l'aide de T2 + DV, puis relaie la réponse OK (3600) au terminal 10.

Au cours d'un deuxième échange de messages L2, le terminal 10 envoie une requête de renouvellement RRE(3600) au serveur applicatif 40, avant l'échéance de la date d'expiration T2 + 3600.

A réception de cette requête sur le port dédié 201 de la passerelle domestique 200, le dispositif 20 selon l'invention vérifie qu'une entrée existe dans la table de traduction d'adresses 26 pour le terminal d'utilisateur 10. Si c'est le cas, plusieurs options sont possibles :

Selon un aspect de l'invention, le dispositif 20 met à jour l'indication de validité de l'entrée à l'aide d'une valeur de durée de validité prédéterminée, préférentiellement une valeur usuelle de bail d'enregistrement.

Selon un autre aspect de l'invention, il extrait une durée de validité de l'enregistrement souhaitée de la requête de renouvellement, si elle existe et met à jour l'indication de validité de l'entrée à partir de la date de réception de la requête de renouvellement et de la durée de validité de l'enregistrement souhaitée.

Selon encore un autre aspect de l'invention, il relaie directement la requête RRE(3600) à l'équipement de collecte 30 et se met en attente d'un message de réponse. Lorsque le message de réponse OK(3600) arrive, à la date de réception T3, il met à jour l'entrée 27 de la table de traduction d'adresses en remplaçant l'ancienne indication de validité par une valeur mise à jour à partir de T3 et d'une durée de validité DV indiquée dans le message de réponse, puis relaie le message de réponse au terminal 10.

Au cours d'un troisième échange de messages L3, le terminal 10 envoie une requête de désenregistrement explicite RDE au serveur SIP 40 avant l'échéance de la date d'expiration T3 + DV..

Selon un aspect de l'invention, le dispositif selon l'invention relaie directement cette requête, puisqu'une entrée existe dans la table de traduction d'adresses 26. A réception de la réponse d'autorisation du serveur SIP 40, à la date de réception T4, il extrait de ce message une durée de validité nulle ou constate l'absence de durée de validité et efface l'entrée 27 de la table de traduction d'adresses.

## Revendications

1. Dispositif (200) de maintien d'une table de traduction d'adresses (20), placé en coupure de flux entre un terminal d'utilisateur (10, 11) et une entité tierce (40) d'un réseau de télécommunications, et apte à mettre en oeuvre des moyens de :
- interception d'un message de requête d'enregistrement émis par le terminal à destination de ladite entité tierce selon un protocole de signalisation applicative, ledit message étant reçu par ledit dispositif sur un port de réception dédié aux échanges de messages selon ledit protocole à une première date de réception,
- vérification de l'existence d'une entrée spécifique aux échanges de messages de signalisation applicative selon ledit protocole entre le terminal et l'entité tierce dans la table de traduction d'adresses, et
- s'il n'existe aucune entrée spécifique aux échanges de messages de signalisation applicative selon ledit protocole entre le terminal et l'entité tierce, création d'une entrée spécifique dans la table de traduction d'adresses associant à une adresse privée et un port privé du terminal dans un réseau privé le reliant audit dispositif, une adresse publique, un port public de ce terminal dans le réseau de télécommunications et une indication de validité de l'entrée, ladite indication de validité prenant en compte la première date de réception et une première durée de validité,
ledit dispositif étant **caractérisé en ce que** ladite première durée de validité a une valeur prédéterminée, qui est spécifique audit protocole de signalisation applicative.

2. Dispositif de maintien d'une table de traduction d'adresses selon la revendication 1, **caractérisé en ce que** la requête d'enregistrement émise par le terminal d'utilisateur comprend une durée de validité d'enregistrement souhaitée et **en ce que** la première durée de validité est choisie égale à ladite durée de validité d'enregistrement souhaitée.

3. Dispositif (200) maintien d'une table de traduction d'adresses (20), placé en coupure de flux entre un terminal d'utilisateur (10, 11) et une entité tierce (40) d'un réseau de télécommunications, et apte à mettre en oeuvre des moyens de :
- interception d'un message de requête d'enregistrement émis par le terminal à destination de ladite entité tierce selon un protocole de signalisation applicative, ledit message étant reçu par ledit dispositif sur un port de réception dédié aux échanges de messages selon ledit protocole à une première date de réception,
- vérification de l'existence d'une entrée spécifique aux échanges de messages de signalisation applicative selon ledit protocole entre le terminal et l'entité tierce dans la table de traduction d'adresses, et
- s'il n'existe aucune entrée spécifique aux échanges de messages de signalisation applicative selon ledit protocole entre le terminal et l'entité tierce, création d'une entrée spécifique dans la table de traduction d'adresses associant à une adresse privée et un port privé du terminal dans un réseau privé le reliant audit dispositif, une adresse publique, un port public de ce terminal dans le réseau de télécommunications et une indication de validité de l'entrée, ladite indication de validité prenant en compte la première date de réception et une première durée de validité,
ledit dispositif étant **caractérisé en ce qu'**il comprend en outre des moyens pour exécuter les étapes suivantes :
- attente d'un message d'autorisation émis par l'entité tierce en réponse à ladite requête à destination du port public du terminal d'utilisateur,
- à réception d'un message d'autorisation à une deuxième date de réception, en provenance de l'entité tierce et à destination du terminal, extraction d'une durée de validité de l'enregistrement, si elle existe, et
- si la durée de validité existe et est non nulle, mise à jour de l'indication de validité de l'entrée à partir de la deuxième date de réception et de la durée de validité de l'enregistrement extraite.

4. Dispositif de maintien d'une table de traduction d'adresses selon la revendication 3, **caractérisé en ce que** l'indication de validité de l'entrée mise à jour est calculée en ajoutant la durée de validité de l'enregistrement à la deuxième date de réception.

5. Dispositif de maintien d'une table de traduction d'adresses selon la revendication 3, **caractérisé en ce que**, lorsqu'une entrée relative au terminal existe déjà dans la table de traduction d'adresses, ledit dispositif relaie directement le message de requête à l'entité tierce et se met en attente d'un message d'autorisation en réponse à ladite requête.

6. Dispositif de maintien d'une table de traduction d'adresses selon la revendication 3, **caractérisé en ce que**, à réception d'un message d'autorisation, comprenant une durée de validité de l'enregistrement nulle ou aucune durée de validité de l'enregistrement, ledit dispositif est apte à mettre en oeuvre des moyens d'effacement de l'entrée de la table de traduction d'adresses.

7. Passerelle domestique ou modem routeur (200) reliant un terminal d'un réseau (10, 11) privé à une entité tierce (40) d'un réseau de télécommunications, comprenant :
- une table de traduction d'adresses (20) apte à stocker une entrée spécifique aux échanges de messages de signalisation applicative entre le terminal d'utilisateur et l'entité tierce du réseau de télécommunications selon un protocole de signalisation applicative, ladite entrée associant une adresse privée et un port privé du terminal dans le réseau privé, à une adresse publique et un port public du terminal dans le réseau de télécommunications et à une indication de validité de ladite entrée ; et
- un dispositif de maintien de la table de traduction d'adresses apte à mettre en oeuvre des moyens de :
- interception d'un message de requête d'enregistrement émis par le terminal à destination de ladite entité tierce selon un protocole de signalisation applicative, ledit message étant reçu par ledit dispositif sur un port de réception dédié aux échanges de messages selon ledit protocole à une première date de réception,
- vérification de l'existence d'une entrée spécifique aux échanges de messages de signalisation applicative selon ledit protocole entre le terminal et l'entité tierce dans la table de traduction d'adresses, et
- s'il n'existe aucune entrée spécifique aux échanges de messages de signalisation applicative selon ledit protocole entre le terminal et l'entité tierce, création d'une entrée spécifique dans la table de traduction d'adresses associant à une adresse privée et un port privé du terminal dans un réseau privé le reliant audit dispositif, une adresse publique, un port public de ce terminal dans le réseau de télécommunications et une indication de validité de l'entrée, ladite indication de validité prenant en compte la première date de réception et une première durée de validité,
**caractérisée en ce que** ladite première durée de validité a une valeur prédéterminée, qui est spécifique audit protocole de signalisation applicative.

8. Procédé de maintien d'une table de traduction d'adresses (20) destiné à être mis en oeuvre par un dispositif (200) placé en coupure de flux entre un terminal d'utilisateur (10, 11) d'un réseau privé et une entité tierce (40) d'un réseau de télécommunications, comportant les étapes suivantes :
- interception d'un message de requête d'enregistrement émis par le terminal à destination de ladite entité tierce selon un protocole de signalisation applicative, ledit message étant reçu par ledit dispositif sur un port de réception dédié aux échanges de messages selon ledit protocole à une première date de réception,
- vérification de l'existence d'une entrée spécifique aux échanges de messages de signalisation applicative selon ledit protocole entre le terminal et l'entité tierce dans la table de traduction d'adresses, et
- s'il n'existe aucune entrée spécifique aux échanges de messages de signalisation applicative selon ledit protocole entre le terminal et l'entité tierce, création d'une entrée spécifique dans la table de traduction d'adresses associant à une adresse privée et un port privé du terminal dans un réseau privé le reliant audit dispositif, une adresse publique, un port public de ce terminal dans le réseau de télécommunications et une indication de validité de l'entrée, ladite indication de validité prenant en compte la première date de réception et une première durée de validité,
**caractérisé en ce que** ladite première durée de validité a une valeur prédéterminée, qui est spécifique audit protocole de signalisation applicative.

9. Procédé de maintien d'une table de traduction d'adresses (20) destiné à être mis en oeuvre par un dispositif (200) placé en coupure de flux entre un terminal d'utilisateur (10, 11) d'un réseau privé et une entité tierce (40) d'un réseau de télécommunications, comportant les étapes suivantes :
- interception d'un message de requête d'enregistrement émis par le terminal à destination de ladite entité tierce selon un protocole de signalisation applicative, ledit message étant reçu par ledit dispositif sur un port de réception dédié aux échanges de messages selon ledit protocole à une première date de réception,
- vérification de l'existence d'une entrée spécifique aux échanges de messages de signalisation applicative selon ledit protocole entre le terminal et l'entité tierce dans la table de traduction d'adresses, et
- s'il n'existe aucune entrée spécifique aux échanges de messages de signalisation applicative selon ledit protocole entre le terminal et l'entité tierce, création d'une entrée spécifique dans la table de traduction d'adresses associant à une adresse privée et un port privé du terminal dans un réseau privé le reliant audit dispositif, une adresse publique, un port public de ce terminal dans le réseau de télécommunications et une indication de validité de l'entrée, ladite indication de validité prenant en compte la première date de réception, **caractérisé en ce qu'**il comprend en outre les étapes suivantes :
- attente d'un message d'autorisation émis par l'entité tierce en réponse à ladite requête à destination du port public du terminal d'utilisateur,
- à réception d'un message d'autorisation à une deuxième date de réception, en provenance de l'entité tierce et à destination du port public du terminal, extraction d'une durée de validité de l'enregistrement, si elle existe, et
- si la durée de validité existe et est non nulle, mise à jour de l'indication de validité de l'entrée à partir de la deuxième date de réception et de la durée de validité de l'enregistrement.

10. Programme d'ordinateur comportant des instructions pour l'exécution des étapes du procédé de maintien d'une table de traduction d'adresses selon la revendication 8 ou la revendication 9, lorsque ledit programme est exécuté par un ordinateur.

## Claims

1. Device (200) for maintaining an address translation table (20), placed so as to intercept the flow between a user terminal (10, 11) and a third-party entity (40) of a telecommunication network, and able to implement means for:
- intercepting a registration request message sent by the terminal to said third-party entity according to an application signalling protocol, said message being received by said device on a reception port dedicated to the exchanges of messages according to said protocol on a first reception date,
- checking for the existence of an entry specific to the exchanges of application signalling messages according to said protocol between the terminal and the third-party entity in the address translation table, and
- if there is no entry specific to the exchanges of application signalling messages according to said protocol between the terminal and the third-party entity, creating a specific entry in the address translation table associating, with a private address and a private port of the terminal in a private network linking it to said device, a public address, a public port of this terminal in the telecommunication network and an entry validity indication, said validity indication taking into account the first reception date and a first validity period, said device being **characterized in that** said first validity period has a predetermined value, which is specific to said application signalling protocol.

2. Device for maintaining an address translation table according to Claim 1, **characterized in that** the registration request sent by the user terminal includes a desired registration validity period and **in that** the first validity period is chosen to equal said desired registration validity period.

3. Device (200) for maintaining an address translation table (20), placed so as to intercept the flow between a user terminal (10, 11) and a third-party entity (40) of a telecommunication network, and able to implement means for:
- intercepting a registration request message sent by the terminal to said third-party entity according to an application signalling protocol, said message being received by said device on a reception port dedicated to the exchanges of messages according to said protocol on a first reception date,
- checking for the existence of an entry specific to the exchanges of application signalling messages according to said protocol between the terminal and the third-party entity in the address translation table, and
- if there is no entry specific to the exchanges of application signalling messages according to said protocol between the terminal and the third-party entity, creating a specific entry in the address translation table associating, with a private address and a private port of the terminal in a private network linking it to said device, a public address, a public port of this terminal in the telecommunication network and an entry validity indication, said validity indication taking into account the first reception date and a first validity period, said device being **characterized in that** it also comprises means for executing the following steps:
- wait for an authorization message sent by the third-party entity in response to said request to the public port of the user terminal,
- on reception of an authorization message on a second reception date, from the third-party entity and to the terminal, extraction of a validity period of the registration, if it exists, and
- if the validity period exists and is non-zero, update the entry validity indication based on the second reception date and on the registration validity period extracted.

4. Device for maintaining an address translation table according to Claim 3, **characterized in that** the entry validity indication updated is calculated by adding the validity period of the registration to the second reception date.

5. Device for maintaining an address translation table according to Claim 3, **characterized in that**, when an entry relative to the terminal already exists in the address translation table, said device directly relays the request message to the third-party entity and waits for an authorization message in response to said request.

6. Device for maintaining an address translation table according to Claim 3, **characterized in that**, on reception of an authorization message, including a zero registration validity period or no registration validity period, said device is able to implement means for deleting the entry from the address translation table.

7. Domestic gateway or router modem (200) linking a terminal of a private network (10, 11) to a third-party entity (40) of a telecommunication network, comprising:
- an address translation table (20) able to store an entry specific to the exchanges of application signalling messages between the user terminal and the third-party entity of the telecommunication network according to an application signalling protocol, said entry associating a private address and a private port of the terminal in the private network with a public address and a public port of the terminal in the telecommunication network and with a validity indication of said entry; and
- a device for maintaining the address translation table able to implement means for:
- intercepting a registration request message sent by the terminal to said third-party entity according to an application signalling protocol, said message being received by said device on a reception port dedicated to the exchanges of messages according to said protocol on a first reception date,
- checking for the existence of an entry specific to the exchanges of application signalling messages according to said protocol between the terminal and the third-party entity in the address translation table, and
- if there is no entry specific to the exchanges of application signalling messages according to said protocol between the terminal and the third-party entity, creating a specific entry in the address translation table associating, with a private address and a private port of the terminal in a private network linking it to said device, a public address, a public port of this terminal in the telecommunication network and an entry validity indication, said validity indication taking into account the first reception date and a first validity period, **characterized in that** said first validity period has a predetermined value, which is specific to said application signalling protocol.

8. Method for maintaining an address translation table (20) intended to be implemented by a device (200) placed so as to intercept the flow between a user terminal (10, 11) of a private network and a third-party entity (40) of a telecommunication network, comprising the following steps:
- interception of a registration request message sent by the terminal to said third-party entity according to an application signalling protocol, said message being received by said device on a reception port dedicated to the exchanges of messages according to said protocol on a first reception date,
- check for the existence of an entry specific to the exchanges of application signalling messages according to said protocol between the terminal and the third-party entity in the address translation table, and
- if there is no entry specific to the exchanges of application signalling messages according to said protocol between the terminal and the third-party entity, creation of a specific entry in the address translation table associating, with a private address and a private port of the terminal in a private network linking it to said device, a public address, a public port of this terminal in the telecommunication network and an entry validity indication, said validity indication taking into account the first reception date and a first validity period,
**characterized in that** said first validity period has a predetermined value, which is specific to said application signalling protocol.

9. Method for maintaining an address translation table (20) intended to be implemented by a device (200) placed so as to intercept the flow between a user terminal (10, 11) of a private network and a third-party entity (40) of a telecommunication network, comprising the following steps:
- interception of a registration request message sent by the terminal to said third-party entity according to an application signalling protocol, said message being received by said device on a reception port dedicated to the exchanges of messages according to said protocol on a first reception date,
- check for the existence of an entry specific to the exchanges of application signalling messages according to said protocol between the terminal and the third-party entity in the address translation table, and
- if there is no entry specific to the exchanges of application signalling messages according to said protocol between the terminal and the third-party entity, creation of a specific entry in the address translation table associating, with a private address and a private port of the terminal in a private network linking it to said device, a public address, a public port of this terminal in the telecommunication network and an entry validity indication, said validity indication taking into account the first reception date, **characterized in that** it also comprises the following steps:
- wait for an authorization message sent by the third-party entity in response to said request to the public port of the user terminal,
- on reception of an authorization message on a second reception date, from the third-party entity and to the public port of the terminal, extraction of a registration validity period, if it exists, and
- if the validity period exists and is non-zero, update the entry validity indication based on the second reception date and on the registration validity period.

10. Computer program comprising instructions for executing steps of the method for maintaining an address translation table according to Claim 8 or Claim 9, when said program is run by a computer.

## Patentansprüche

1. Vorrichtung (200) zum Halten einer Adressumsetzungstabelle (20), die in Flussunterbrechung zwischen einem Benutzerendgerät (10, 11) und einer Dritt-Entität (40) eines Telekommunikationsnetzwerks angeordnet ist und Einrichtungen verwenden kann, um:
- eine vom Endgerät an die Dritt-Entität gemäß einem Anwendungssignalisierungsprotokoll gesendete Registrierungsanforderungsmitteilung aufzufangen, wobei die Mitteilung von der Vorrichtung an einem ersten Empfangsdatum an einem den Austauschvorgängen von Mitteilungen gemäß dem Protokoll dedizierten Empfangsport empfangen wird,
- das Vorhandensein eines für die Austauschvorgänge von Mitteilungen einer Anwendungssignalisierung gemäß dem Protokoll zwischen dem Endgerät und der Dritt-Entität spezifischen Eintrags in der Adressumsetzungstabelle zu überprüfen, und
- wenn es keinen für die Austauschvorgänge von Mitteilungen einer Anwendungssignalisierung gemäß dem Protokoll zwischen dem Endgerät und der Dritt-Entität spezifischen Eintrag gibt, einen spezifischen Eintrag in der Adressumsetzungstabelle zu erzeugen, der einer privaten Adresse und einem privaten Port des Endgeräts in einem privaten Netzwerk, der es mit der Vorrichtung verbindet, eine öffentliche Adresse, einen öffentlichen Port dieses Endgeräts im Telekommunikationsnetzwerk und eine Gültigkeitsanzeige des Eintrags zuordnet, wobei die Gültigkeitsanzeige das erste Empfangsdatum und eine erste Gültigkeitsdauer berücksichtigt,
wobei die Vorrichtung **dadurch gekennzeichnet ist, dass** die erste Gültigkeitsdauer einen vorbestimmten Wert hat, der für das Anwendungssignalisierungsprotokoll spezifisch ist.

2. Vorrichtung zum Halten einer Adressumsetzungstabelle nach Anspruch 1, **dadurch gekennzeichnet, dass** die vom Benutzerendgerät gesendete Registrierungsanforderung eine gewünschte Registrierungsgültigkeitsdauer enthält, und dass die erste Gültigkeitsdauer gleich der gewünschten Registrierungsgültigkeitsdauer gewählt wird.

3. Vorrichtung (200) zum Halten einer Adressumsetzungstabelle (20), die in Flussunterbrechung zwischen einem Benutzerendgerät (10, 11) und einer Dritt-Entität (40) eines Telekommunikationsnetzwerks angeordnet ist und Einrichtungen verwenden kann, um:
- eine vom Endgerät an die Dritt-Entität gemäß einem Anwendungssignalisierungsprotokoll gesendete Registrierungsanforderungsmitteilung aufzufangen, wobei die Mitteilung von der Vorrichtung an einem ersten Empfangsdatum an einem den Austauschvorgängen von Mitteilungen gemäß dem Protokoll dedizierten Empfangsport empfangen wird,
- das Vorhandensein eines für die Austauschvorgänge von Mitteilungen einer Anwendungssignalisierung gemäß dem Protokoll zwischen dem Endgerät und der Dritt-Entität spezifischen Eintrags in der Adressumsetzungstabelle zu überprüfen, und
- wenn es keinen für die Austauschvorgänge von Mitteilungen einer Anwendungssignalisierung gemäß dem Protokoll zwischen dem Endgerät und der Dritt-Entität spezifischen Eintrag gibt, einen spezifischen Eintrag in der Adressumsetzungstabelle zu erzeugen, der einer privaten Adresse und einem privaten Port des Endgeräts in einem privaten Netzwerk, der es mit der Vorrichtung verbindet, eine öffentliche Adresse, einen öffentlichen Port dieses Endgeräts im Telekommunikationsnetzwerk und eine Gültigkeitsanzeige des Eintrags zuordnet, wobei die Gültigkeitsanzeige das erste Empfangsdatum und eine erste Gültigkeitsdauer berücksichtigt,
wobei die Vorrichtung **dadurch gekennzeichnet ist, dass** sie außerdem Einrichtungen enthält, um die folgenden Schritte auszuführen:
- Warten auf eine Berechtigungsmitteilung, die von der Dritt-Entität als Antwort auf die Anforderung an den öffentlichen Port des Benutzerendgeräts gesendet wird,
- bei Empfang einer Berechtigungsmitteilung an einem zweiten Empfangsdatum von der Dritt-Entität und an das Endgerät, Entnahme einer Gültigkeitsdauer der Registrierung, wenn sie vorhanden ist, und
- wenn die Gültigkeitsdauer vorhanden und ungleich Null ist, Aktualisieren der Gültigkeitsanzeige des Eintrags ausgehend vom zweiten Empfangsdatum und von der entnommenen Gültigkeitsdauer der Registrierung.

4. Vorrichtung zum Halten einer Adressumsetzungstabelle nach Anspruch 3, **dadurch gekennzeichnet, dass** die aktualisierte Gültigkeitsanzeige des Eintrags berechnet wird, indem die Gültigkeitsdauer der Registrierung zum zweiten Empfangsdatum hinzugefügt wird.

5. Vorrichtung zum Halten einer Adressumsetzungstabelle nach Anspruch 3, **dadurch gekennzeichnet, dass**, wenn ein Eintrag bezüglich des Endgeräts bereits in der Adressumsetzungstabelle vorhanden ist, die Vorrichtung direkt die Anforderungsmitteilung an die Dritt-Entität überträgt und auf eine Berechtigungsmitteilung als Antwort auf die Anforderung wartet.

6. Vorrichtung zum Halten einer Adressumsetzungstabelle nach Anspruch 3, **dadurch gekennzeichnet, dass** bei Empfang einer Berechtigungsmitteilung, die eine Gültigkeitsdauer der Registrierung Null oder gar keine Gültigkeitsdauer der Registrierung enthält, die Vorrichtung Einrichtungen zum Löschen des Eintrags aus der Adressumsetzungstabelle anwenden kann.

7. Heim-Gateway oder Router-Modem (200), das ein Endgerät eines privaten Netzwerks (10, 11) mit einer Dritt-Entität (40) eines Telekommunikationsnetzwerks verbindet, das enthält:
- eine Adressumsetzungstabelle (20), die einen für die Austauschvorgänge von Mitteilungen einer Anwendungssignalisierung zwischen dem Benutzerendgerät und der Dritt-Entität des Telekommunikationsnetzwerks gemäß einem Anwendungssignalisierungsprotokoll spezifischen Eintrag speichern kann, wobei der Eintrag eine private Adresse und einen privaten Port des Endgeräts im privaten Netzwerk einer öffentlichen Adresse und einem öffentlichen Port des Endgeräts im Telekommunikationsnetzwerk und einer Gültigkeitsanzeige des Eintrags zuordnet; und
- eine Vorrichtung zum Halten der Adressumsetzungstabelle, die Einrichtungen anwenden kann, um:
- eine vom Endgerät an die Dritt-Entität gemäß einem Anwendungssignalisierungsprotokoll gesendete Registrierungsanforderungsmitteilung aufzufangen, wobei die Mitteilung von der Vorrichtung an einem ersten Empfangsdatum an einem den Austauschvorgängen von Mitteilungen gemäß dem Protokoll dedizierten Empfangsport empfangen wird,
- das Vorhandensein eines für die Austauschvorgänge von Mitteilungen einer Anwendungssignalisierung gemäß dem Protokoll zwischen dem Endgerät und der Dritt-Entität in der Adressumsetzungstabelle spezifischen Eintrags zu überprüfen, und
- wenn es keinen für die Austauschvorgänge von Mitteilungen einer Anwendungssignalisierung gemäß dem Protokoll zwischen dem Endgerät und der Dritt-Entität spezifischen Eintrag gibt, einen spezifischen Eintrag in der Adressumsetzungstabelle zu erzeugen, der einer privaten Adresse und einem privaten Port des Endgeräts in einem privaten Netzwerk, der es mit der Vorrichtung verbindet, eine öffentlichen Adresse, einen öffentlichen Port dieses Endgeräts in dem Telekommunikationsnetzwerk und eine Gültigkeitsanzeige des Eintrags zuordnet, wobei die Gültigkeitsanzeige das erste Empfangsdatum und eine erste Gültigkeitsdauer berücksichtigt,
**dadurch gekennzeichnet, dass** die erste Gültigkeitsdauer einen vorbestimmten Wert hat, der für das Anwendungssignalisierungsprotokoll spezifisch ist.

8. Verfahren zum Halten einer Adressumsetzungstabelle (20), das dazu bestimmt ist, von einer Vorrichtung (200) angewendet zu werden, die in Flussunterbrechung zwischen einem Benutzerendgerät (10, 11) eines privaten Netzwerks und einer Dritt-Entität (40) eines Telekommunikationsnetzwerks angeordnet ist, das die folgenden Schritte aufweist:
- Auffangen einer vom Endgerät an die Dritt-Entität gemäß einem Anwendungssignalisierungsprotokoll gesendeten Registrierungsanforderungsmitteilung, wobei die Mitteilung von der Vorrichtung an einem ersten Empfangsdatum an einem für die Austauschvorgänge von Mitteilungen gemäß dem Protokoll dedizierten Empfangsport empfangen wird,
- Überprüfen des Vorhandenseins eines für die Austauschvorgänge von Mitteilungen einer Anwendungssignalisierung gemäß dem Protokoll zwischen dem Endgerät und der Dritt-Entität in der Adressumsetzungstabelle spezifischen Eintrags, und
- wenn es keinen für die Austauschvorgänge von Mitteilungen einer Anwendungssignalisierung gemäß dem Protokoll zwischen dem Endgerät und der Dritt-Entität spezifischen Eintrag gibt, Erzeugen eines spezifischen Eintrags in der Adressumsetzungstabelle, der einer privaten Adresse und einem privaten Port des Endgeräts in einem privaten Netzwerk, der es mit der Vorrichtung verbindet, eine öffentliche Adresse, einen öffentlichen Port dieses Endgeräts im Telekommunikationsnetzwerk und eine Gültigkeitsanzeige des Eintrags zuordnet, wobei die Gültigkeitsanzeige das erste Empfangsdatum und eine erste Gültigkeitsdauer berücksichtigt,
**dadurch gekennzeichnet, dass** die erste Gültigkeitsdauer einen vorbestimmten Wert hat, der für das Anwendungssignalisierungsprotokoll spezifisch ist.

9. Verfahren zum Halten einer Adressumsetzungstabelle (20), das dazu bestimmt ist, von einer Vorrichtung (200) angewendet zu werden, die in Flussunterbrechung zwischen einem Benutzerendgerät (10, 11) eines privaten Netzwerks und einer Dritt-Entität (40) eines Telekommunikationsnetzwerks angeordnet ist, das die folgenden Schritte aufweist:
- Auffangen einer vom Endgerät an die Dritt-Entität gemäß einem Anwendungssignalisierungsprotokoll gesendeten Registrierungsanforderungsmitteilung, wobei die Mitteilung von der Vorrichtung an einem ersten Empfangsdatum an einem den Austauschvorgängen von Mitteilungen gemäß dem Protokoll dedizierten Empfangsport empfangen wird,
- Überprüfen des Vorhandenseins eines für die Austauschvorgänge von Mitteilungen einer Anwendungssignalisierung gemäß dem Protokoll zwischen dem Endgerät und der Dritt-Entität in der Adressumsetzungstabelle spezifischen Eintrags, und
- wenn es keinen für die Austauschvorgänge von Mitteilungen einer Anwendungssignalisierung gemäß dem Protokoll zwischen dem Endgerät und der Dritt-Entität spezifischen Eintrag gibt, Erzeugen eines spezifischen Eintrags in der Adressumsetzungstabelle, der einer privaten Adresse und einem privaten Port des Endgeräts in einem privaten Netzwerk, der es mit der Vorrichtung verbindet, eine öffentliche Adresse, einen öffentlichen Port dieses Endgeräts im Telekommunikationsnetzwerk und eine Gültigkeitsanzeige des Eintrags zuordnet, wobei die Gültigkeitsanzeige das erste Empfangsdatum berücksichtigt,
**dadurch gekennzeichnet, dass** es außerdem die folgenden Schritte enthält:
- Warten auf eine Berechtigungsmitteilung, die von der Dritt-Entität als Antwort auf die Anforderung an den öffentlichen Port des Benutzerendgeräts gesendet wird,
- bei Empfang einer Berechtigungsmitteilung, an einem zweiten Empfangsdatum, von der Dritt-Entität und an den öffentlichen Port des Endgeräts, Entnahme einer Gültigkeitsdauer aus der Registrierung, wenn sie vorhanden ist, und
- wenn die Gültigkeitsdauer vorhanden und ungleich Null ist, Aktualisierung der Gültigkeitsanzeige des Eintrags ausgehend vom zweiten Empfangsdatum und von der Gültigkeitsdauer der Registrierung.

10. Computerprogramm, das Anweisungen zur Ausführung der Schritte des Verfahrens zum Halten einer Adressumsetzungstabelle nach Anspruch 8 oder Anspruch 9 enthält, wenn das Programm von einem Computer ausgeführt wird.
